# EUROPEAN PATENT APPLICATION

(11) **EP 4 528 509 A1**
(43) Date of publication of application: **26.03.2025**
(21) Application number: 23807217.7
(22) Date of filing: 12.01.2023
(51) Int. Cl.: G06F 9/50

(54) **COMPUTER SYSTEM AND MATRIX CALCULATION METHOD**

(30) Priority: 17.05.2022 JP 2022081124
(71) Applicant: Hitachi, Ltd., Tokyo 100-8280 (JP)
(72) Inventor: KONOURA Hiroaki, Tokyo 100-8280 (JP); YONEYAMA Motoki, Tokyo 100-8280 (JP); OKITA Koichi, Tokyo 100-8280 (JP); FUJIKI Nobuhiro, Tokyo 100-8280 (JP)
(74) Representative: Mewburn Ellis LLP
(86) International application number: PCT/JP2023/000583
(87) International publication number: WO 2023/223599

(57) **Abstract**

A computer system is connected to an execution environment system that provides an instance for executing an application and an autoscaling system that controls scaling of the instance. At least one application that executes parallel distributed processing in an event-driven manner operates on the execution environment system. The computer system acquires, from the execution environment system, information regarding the number of queued events in the application and an event processing time as application metrics, and calculates, based on the application metrics, a determination metric to be used by the autoscaling system to determine whether or not it is necessary to execute the scaling of the instance.

## Description

### Incorporation by Reference

This application claims priority to Japanese Patent Application No. 2022-81124 filed on May 17, 2022, the contents of which are incorporated herein by reference.

### Technical Field

The present invention relates to an autoscaling technology of a system in which an application that executes parallel distributed processing in an event-driven manner operates.

### Background Art

As containerization in which an application is implemented as a container becomes widespread, a container orchestration tool such as Kubernetes (k8s) and a container orchestration service such as Amazon elastic container service (ECS) have become widespread in order to reduce an operation load of containers arranged in a plurality of servers.

For example, k8s manages, as components, a node corresponding to a physical/virtual machine, a pod corresponding to a logical host, and a container executed on the pod, and an application is executed on the container. At this time, a node machine group for executing the containerized application is referred to as a cluster.

Utilizing container orchestration enables container management and operational automation, such as container health monitoring, automatic failure recovery, and autoscaling. In the autoscaling, the container orchestration can dynamically add (scale out) pods/nodes to execute as many containers as necessary to reduce the load when a value (metric) indicating a load status of the container being activated exceeds a threshold. Further, in the autoscaling, the container orchestration can dynamically stop (scale in) pods/nodes according to the number of containers necessary to maintain performance when the metric falls below the threshold. As a result, the system can stably operate using minimum resources.

In addition, a managed container service that uses an external instance without the need for an own company to prepare an instance (physical/virtual machine) for implementing a container has also become widespread. In the managed container service, it is possible to generate a container on an instance managed on a cloud side and execute an application, and it is not necessary to manage instance security measures, an operation system (OS), upgrade of various packages, and the like. Since the managed container service is a pay-per-use charge system, there is a disadvantage that financial cost increases when the number of used containers is large and a use time is long.

There are increasing cases in which the container orchestration service and the managed container service are used in combination in order to reduce both the operation management cost and the financial cost.

For example, in the case of k8s, scaling using a horizontal pod autoscaler (HPA) and a metric server arranged in a container is known. Specifically, the metric server acquires a central processing unit (CPU) usage rate, a memory usage rate, and the like as metrics from a pod and transmits the metrics to the HPA, and the HPA compares thresholds with the metrics to calculate the number of pods necessary for container execution, and executes horizontal scaling. As a result, it is possible to reduce the financial cost while maintaining the performance.

The CPU usage rate and the memory usage rate are known as standard metrics. The standard metrics are effective metrics for controlling scaling of a case where the containers themselves can be executed in parallel and the CPU usage rate and the memory usage rate increase linearly.

Meanwhile, when embedding business logic into an application, events that internally call a plurality of different processings may occur for one request, and parallel distributed processing may be executed in an event-driven manner. There may be an application including complicated parallel distributed processing in which, for example, processing corresponding to a certain event waits for completion of processing corresponding to another event or generates another event. In the case of an application in which parallel distributed processing that complicatedly branches inside is executed, a load status of the application cannot be correctly estimated with the standard metrics acquired from the pod, and thus appropriate scaling cannot be executed. For example, in a case where the CPU usage rate is low but a large number of processes waiting for event processing are accumulated, scaling of the pod is required, but scaling using the standard metrics cannot cope with such a case.

PTLs 1 and 2 are known as technologies for grasping and scaling a load change for an application that executes parallel distributed processing.

PTL 1 describes that "an information processing device includes a receiving unit that receives a notification indicating a predetermined operation timing before a service is used in a terminal device from the terminal device, and a scaler that executes scaling of the service based on the notification".

PTL 2 describes that "the number of messages to be processed queued in a message queue is acquired, and scale-out is executed in a case where the number of messages exceeds a scale-out first threshold and the number of increased messages exceeds a predetermined number or in a case where the number of messages exceeds a scale-out second threshold, and scale-in is executed in a case where the number of messages falls below a scale-in first threshold, and the number of decreased messages exceeds a predetermined number, or in a case where the number of messages falls below a scale-in second threshold".

### Citation List

### Patent Literature

PTL 1: JP 2018-128866 A
PTL 2: JP 2017-162059 A

### Summary of Invention

### Technical Problem

PTL 1 discloses a system that acquires a notification indicating a predetermined operation timing at a previous stage in order to grasp a sudden change in load from a routing table storage unit of a load balancer and determines whether or not scale-out or scale-in is necessary. However, scaling in which a load status including a processing time corresponding to each event is determined for parallel distributed processing for each event is not disclosed.

PTL 2 discloses a system that executes scaling by using the number of queued messages in a message queue as a determination material in parallel processing for messages. However, scaling in a case where there are a plurality of types of messages (events) and a processing time corresponding to the message varies is not disclosed.

In addition, PTLs 1 and 2 and the like do not mention a scaling execution method for a parallel distributed processing application in cooperation with an external autoscaling service.

An object of the present invention is to implement a system and a method for calculating a determination metric that is a metric for controlling autoscaling of a system in which an application that executes parallel distributed processing in an event-driven manner operates and that takes into consideration a processing load of the application.

### Solution to Problem

A typical example of the invention disclosed in the present application is as follows. That is, a computer system includes at least one computer, in which the computer system is connected to an execution environment system that provides an instance for executing an application and an autoscaling system that controls scaling of the instance of the execution environment system, at least one application that executes parallel distributed processing in an event-driven manner operates on the execution environment system, and the at least one computer acquires, from the execution environment system, information regarding the number of queued events in the application and an event processing time as application metrics, calculates a determination metric to be used for determining, by the autoscaling system, whether or not it is necessary to execute the scaling of the instance based on the application metrics, and transmits the determination metric to the autoscaling system.

### Advantageous Effects of Invention

According to the present disclosure, it is possible to calculate the determination metric that takes into consideration a processing load of the application. Problems, configurations, and effects other than those described above will become apparent by the following description of embodiments.

### Brief Description of Drawings

[FIG. 1] FIG. 1 is a diagram illustrating an example of a configuration of an information technology (IT) system according to a first embodiment.
[FIG. 2] FIG. 2 is a diagram illustrating an example of a configuration of a computer that implements a server of the first embodiment.
[FIG. 3] FIG. 3 is a diagram illustrating an example of a functional configuration of an application execution server of the first embodiment.
[FIG. 4] FIG. 4 is a diagram illustrating an example of a functional configuration of a determination metric calculation server of the first embodiment.
[FIG. 5A] FIG. 5A is a diagram illustrating an example of event history information included in a history database (DB) of the first embodiment.
[FIG. 5B] FIG. 5B is a diagram illustrating an example of scaling history information included in the history DB of the first embodiment.
[FIG. 5C] FIG. 5C is a diagram illustrating an example of container number history information included in the history DB of the first embodiment.
[FIG. 5D] FIG. 5D is a diagram illustrating an example of determination metric history information included in the history DB of the first embodiment.
[FIG. 6] FIG. 6 is a diagram illustrating an example of cooperation between servers in the IT system of the first embodiment.
[FIG. 7] FIG. 7 is a diagram illustrating a flow of processing in the IT system of the first embodiment.
[FIG. 8] FIG. 8 is a flowchart illustrating an example of determination metric generation processing executed by a determination metric calculation unit of the first embodiment.
[FIG. 9] FIG. 9 is a view illustrating an example of a screen displayed by a metric visualization unit of the first embodiment;
[FIG. 10] FIG. 10 is a diagram illustrating an example of a functional configuration of a determination metric calculation server of a second embodiment.
[FIG. 11] FIG. 11 is a diagram illustrating an example of cooperation between servers in an IT system of the second embodiment.

### Description of Embodiments

Hereinafter, embodiments of the present invention will be described with reference to the drawings. However, the present invention is not to be construed as being limited to the description of the following embodiments. Those skilled in the art can easily understand that the specific configuration can be changed without departing from the spirit or gist of the present invention.

In the configurations of the invention described below, the same or similar configurations or functions are denoted by the same reference signs, and an overlapping description is omitted.

Notations such as "first", "second", and "third" in the present specification and the like are attached to identify components, and do not necessarily limit the number or order.

The position, size, shape, range, and the like of each component illustrated in the drawings and the like do not represent the actual position, size, shape, range, and the like in some cases in order to facilitate understanding of the invention. Therefore, the present invention is not limited to the position, size, shape, range, and the like disclosed in the drawings and the like.

### [First Embodiment]

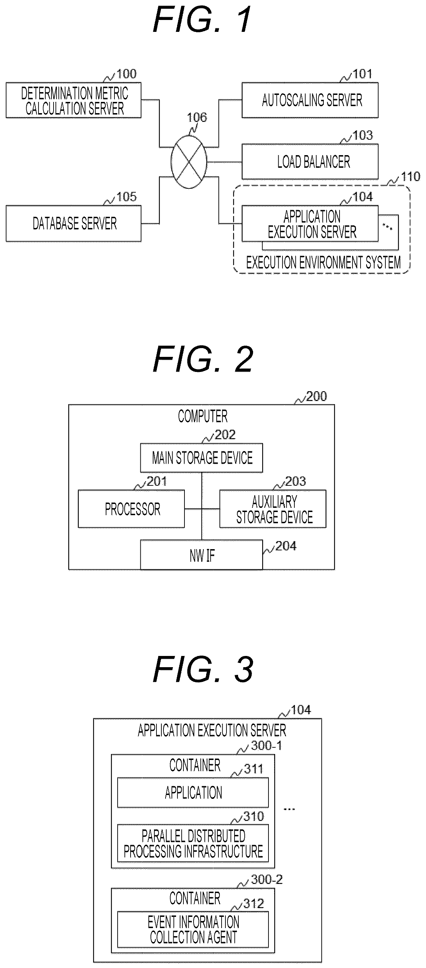

FIG. 1 is a diagram illustrating an example of a configuration of an information technology (IT) system of a first embodiment. FIG. 2 is a diagram illustrating an example of a configuration of a computer that implements a server of the first embodiment.

The IT system includes a determination metric calculation server 100, an autoscaling server 101, a load balancer 103, a plurality of application execution servers 104, and a database server 105. The servers are connected to each other via a network 106. The network 106 is a local area network (LAN), a wide area network (WAN), the Internet, or the like. A network connection method may be either wired connection or wireless connection. Furthermore, the network 106 may be a private network or a public network.

The application execution server 104 is a server that implements an instance for executing an application 311 (see FIG. 3). An execution environment system 110 includes the plurality of application execution servers 104.

The load balancer 103 allocates requests to the applications 311. The application 311 executed on the application execution server 104 executes parallel distributed processing in an event-driven manner according to the received request. The application execution server 104 accesses the database server 105 as necessary.

The autoscaling server 101 is a server that implements an autoscaling service that increases or decreases the number of application execution servers 104 based on a result of comparison between a determination metric and a threshold described below. For example, a horizontal scaling function of an orchestration service including Amazon Elastic Kubernetes Service (EKS) is assumed. In the present embodiment, the execution environment system 110 is a scaling target of the autoscaling server 101.

The determination metric calculation server 100 calculates a determination metric used by the autoscaling server 101.

The server of the IT system is implemented by using, for example, a computer 200 as illustrated in FIG. 2. The computer 200 includes a processor 201, a main storage device 202, an auxiliary storage device 203, and a network interface 204. The hardware elements are connected to each other via a bus. The computer 200 may include an input device that receives an input from a user and an output device that outputs data visually recognizable by the user. The input device is, for example, a keyboard, a mouse, or a touch panel, and the output device is, for example, a display or a printer.

The processor 201 executes a program stored in the main storage device 202. The processor 201 executes processing according to the program to operate as a functional unit (module) that implements a specific function. In the following description, when processing is described using a functional unit as a subject, the description indicates that the processor 201 executes a program for implementing the functional unit.

A field programmable gate array (FPGA) or an application specific integrated circuit (ASIC) may be used instead of the processor 201. In addition, the processor 201 may be used in combination with an FPGA or an ASIC.

The main storage device 202 is a high-speed storage device such as a dynamic random access memory (DRAM), and stores a program executed by the processor 201 and data used when the program is executed. The main storage device 202 is also used as a work area. The computer 200 may include a read only memory (ROM) that stores a basic input/output system (BIOS) and the like.

The auxiliary storage device 203 is a large-capacity storage device such as a hard disk drive (HDD) or a solid state drive (SSD), and permanently stores data. Program and data stored in the main storage device 202 may be stored in the auxiliary storage device 203. In this case, the processor 201 reads the program and data from the auxiliary storage device 203 and loads the program and data into the main storage device 202.

The network interface 204 communicates with other devices via a network according to a predetermined protocol.

The server may be implemented using a virtual machine. Furthermore, the server may be implemented by using a cloud service or a managed container service.

FIG. 3 is a diagram illustrating an example of a functional configuration of the application execution server 104 according to the first embodiment.

The application execution server 104 can execute a plurality of containers 300. In FIG. 3, a container 300-1 in which the application 311 operates and a container 300-2 in which an event information collection agent 312 operates are executed.

The application 311 is executed on a parallel distributed processing infrastructure 310. The application 311 may communicate with another application 311 via the parallel distributed processing infrastructure 310.

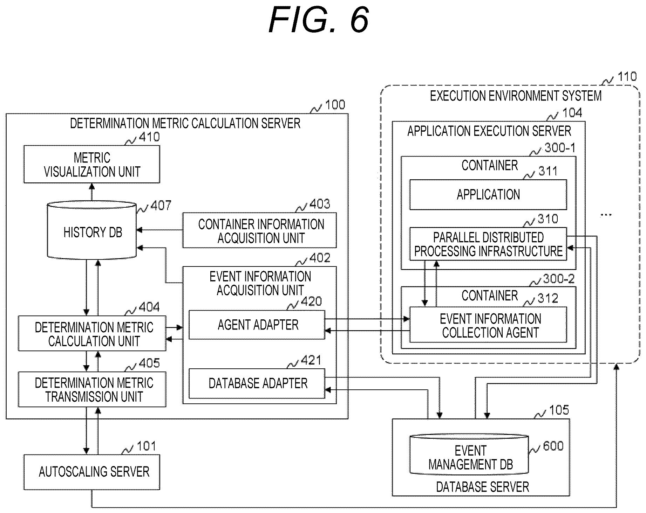

The parallel distributed processing infrastructure 310 stores a pre-processing event, a processing completion event, and the like in a queue on the main storage device 202 in order to allocate processing execution destinations, coordinate processing, and record a processing status before and after execution of a plurality of event handling processings constituting the application 311. The parallel distributed processing infrastructure 310 can also use an event storage database 600 (see FIG. 6) of the database server 105 to avoid a loss of events and accommodate a large number of events.

The event information collection agent 312 periodically acquires information regarding an event, such as the number of events queued in the queue (the number of queued events) and an event processing time, from the parallel distributed processing infrastructure 212 by using an application program interface (API), a command line interface (CLI), or the like. The event processing time does not have to be included in the information acquired from the parallel distributed processing infrastructure 212. In this case, the information includes a timestamp related to the event. The event processing time can be calculated using the timestamp described above.

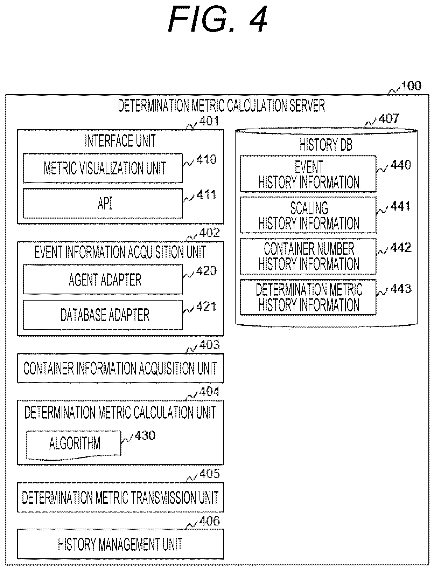

FIG. 4 is a diagram illustrating an example of a functional configuration of the determination metric calculation server 100 of the first embodiment.

The determination metric calculation server 100 includes an interface unit 401, an event information acquisition unit 402, a container information acquisition unit 403, a determination metric calculation unit 404, a determination metric transmission unit 405, and a history management unit 406. In addition, the determination metric calculation server 100 holds a history DB 407.

The history DB 407 is a database for managing various histories, and stores event history information 440, scaling history information 441, container number history information 442, and determination metric history information 443.

The event history information 440 is information for managing a history of the information regarding the event. The scaling history information 441 is information for managing an execution history of scaling by the autoscaling server 101. The container number history information 442 is information for managing a history of the number of containers in the execution environment system 110. The determination metric history information 443 is information for managing a determination metric history.

The interface unit 401, the event information acquisition unit 402, the container information acquisition unit 403, the determination metric calculation unit 404, the determination metric transmission unit 405, and the history management unit 406 are functional units implemented by the processor 201 executing a program.

The interface unit 401 provides various interfaces. The interface unit 401 includes a metric visualization unit 410 and an API 411 that acquires data presented by the metric visualization unit 410.

The event information acquisition unit 402 acquires the information regarding the event including the event processing time or the like, and stores the information in the event history information 440 of the history DB 407. The event information acquisition unit 402 includes an agent adapter 420 and a database adapter 421. The agent adapter 420 is an adapter for accessing the event information collection agent 312. The database adapter 421 is an adapter for accessing the database server 105.

In order to grasp information such as the number of containers 300 currently executed in the execution environment system 110 and an execution status, the container information acquisition unit 403 acquires a control log of the autoscaling server 101, stores the control log in the scaling history information 441, executes a status confirmation command of the container 300, and stores the acquired information in the container number history information 442.

The determination metric calculation unit 404 calculates the determination metric by using the current number of queued event, the event processing time, and the history DB 407, and registers the determination metric in the determination metric history information 443 of the history DB 407. In addition, the determination metric calculation unit 404 instructs the determination metric transmission unit 405 to transmit the determination metric. The determination metric calculation unit 404 implements an algorithm 430 for calculating the determination metric.

The determination metric transmission unit 405 transmits the determination metric to the autoscaling server 101. The history management unit 406 controls access of each functional unit to the history DB 407.

If necessary, an adapter group used to acquire information may be added to the event information acquisition unit 402, or an adapter may be processed. In addition, new information may be added to the history DB 407. The history DB 407 may be managed using an external database service such as the database server 105.

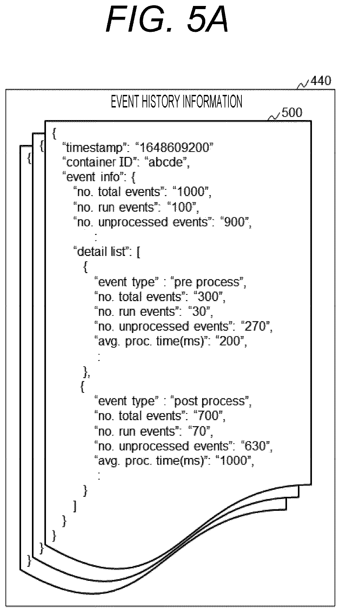

FIG. 5A is a diagram illustrating an example of the event history information 440 included in the history DB 407 of the first embodiment.

The event history information 440 stores, for example, data 500 in a JavaScript Object Notation (JSON) format.

In the data 500, "timestamp" represents a timestamp, "container ID" represents identification information of the container, "no. total events" represents the total number of events, "no. run events" represents the number of events that are running, and "no. unprocessed events" represents the number of unprocessed events.

The data 500 includes information regarding pre-processing and post-processing. Specifically, "event type" represents the type of an event, "no. total events" represents the total number of events, "no. run events" represents the number of events that are running, "no. unprocessed events" represents the number of unprocessed events, and "avg. proc. time (ms)" represents an average value of the processing time (a statistical value of the processing time).

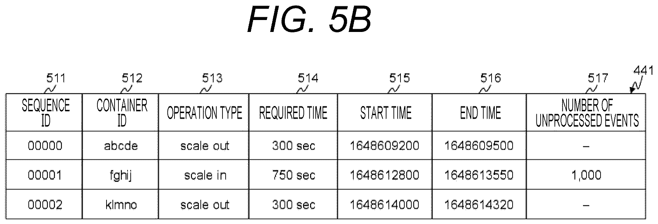

FIG. 5B is a diagram illustrating an example of the scaling history information 441 included in the history DB 407 of the first embodiment.

The scaling history information 441 stores an entry including a sequence ID 511, a container ID 512, an operation type 513, a required time 514, a start time 515, an end time 516, and the number of unprocessed events 517. One entry exists for one control log. Note that fields included in the entry are not limited to those described above. Any of the fields described above does not have to be included, and other fields may be included.

The sequence ID 511 is a field for storing identification information of an autoscaling task. The container ID 512 is a field for storing identification information of the container 300 to be subjected to autoscaling. The operation type 513 is a field for storing the type of an autoscaling operation.

The required time 514 is a field for storing a time required for activating/stopping autoscaling. The start time 515 is a field for storing a start time of autoscaling. The end time 516 is a field for storing an end time of autoscaling.

The number of unprocessed events 517 is a field for storing the number of unprocessed events in the container 300 to be scaled in. The value is used to calculate a time for processing the unprocessed event of the container 300 to be scaled in, and a container stop time. In a case of adding information to the scaling history information 441, the container information acquisition unit 403 refers to the event history information 440 and reflects the total number of events of the data 500 with the timestamp closest to the current time on the number of unprocessed events 517.

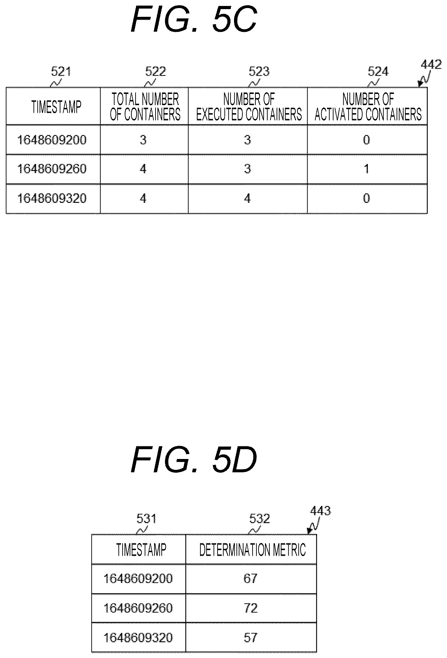

FIG. 5C is a diagram illustrating an example of the container number history information 442 included in the history DB 407 of the first embodiment.

The container number history information 442 stores an entry including a timestamp 521, the total number of containers 522, the number of executed containers 523, and the number of activated containers 524. One entry exists for one log. Note that fields included in the entry are not limited to those described above. Any of the fields described above does not have to be included, and other fields may be included.

The timestamp 521 is a field for storing a timestamp at which the log is acquired. The total number of containers 522 is a field for storing the total number of containers 300 at the time of log acquisition. The number of executed containers 523 is a field for storing the number of executed containers 300. The number of activated containers 524 is a field for storing the number of activated containers 300.

FIG. 5D is a diagram illustrating an example of the determination metric history information 443 included in the history DB 407 of the first embodiment.

The determination metric history information 443 stores an entry including a timestamp 531 and a determination metric 532. One entry exists for one log. Note that fields included in the entry are not limited to those described above. Any of the fields described above does not have to be included, and other fields may be included.

The timestamp 531 is a field for storing a timestamp at which the log is acquired. The determination metric 532 is a field for storing the determination metric calculated by the determination metric calculation unit 404.

A format of data stored in the information included in the history DB 407 is not limited. For example, data in a JSON format, data in a comma separated value (CSV) format, data in a table format, or data in a time series database format may be used.

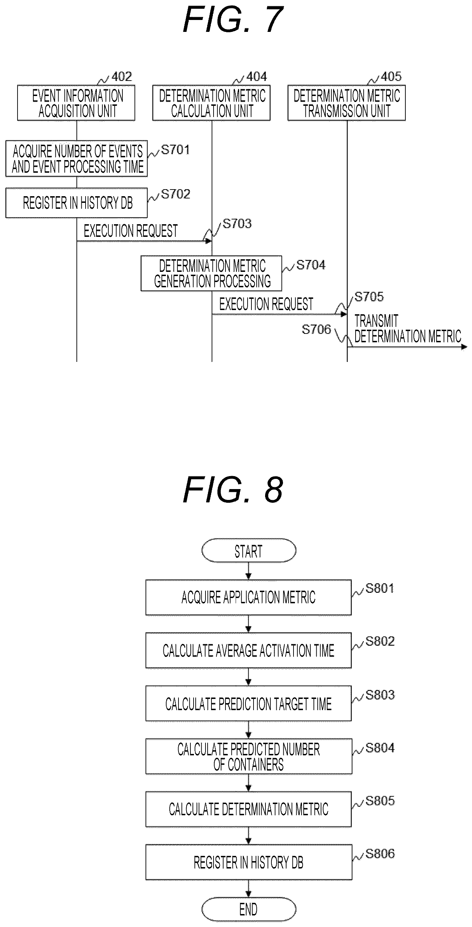

FIG. 6 is a diagram illustrating an example of cooperation between the servers in the IT system of the first embodiment. FIG. 7 is a diagram illustrating a flow of processing in the IT system of the first embodiment.

The event information acquisition unit 402 of the determination metric calculation server 100 acquires the data 500 including the information regarding the number of queued events, the event processing time, and the like via the agent adapter 420 or the database adapter 421 (step S701), and stores the data 500 in the event history information 440 (step S702). The event information acquisition unit 402 acquires the number of queued events and the event processing time as application metrics from the data 500.

The event information acquisition unit 402 transmits an execution request including the application metrics (the number of queued events and the event processing time) as arguments to the determination metric calculation unit 404 (step S703).

The determination metric calculation unit 404 executes determination metric calculation processing by using the application metrics included in the execution request and the history DB 407 (step S704). Details of the determination metric calculation processing will be described with reference to FIG. 8.

The determination metric calculation unit 404 transmits an execution request including the calculated determination metric as an argument to the determination metric transmission unit 405 (step S705).

The determination metric transmission unit 405 transmits the determination metric to the autoscaling server 101 (step S706).

The autoscaling server 101 determines whether or not it is necessary to execute scaling of the container 300 based on the determination metric received from the determination metric calculation server 100. In a case where it is necessary to execute scaling, the autoscaling server 101 executes the scaling by activating or stopping the container 300.

The container information acquisition unit 403 of the determination metric calculation server 100 acquires the control log of the autoscaling server 101 and stores the control log in the scaling history information 441. In addition, the container information acquisition unit 403 acquires information regarding the number of containers 300 and an activation time of the execution environment system 110, and stores the acquired information in the container number history information 442.

The interface unit 401 of the determination metric calculation server 100 displays a screen indicating a relevance of the application metrics, the determination metric, the number of containers, and the like based on the history DB 407.

FIG. 8 is a flowchart illustrating an example of determination metric generation processing executed by the determination metric calculation unit 404 of the first embodiment.

The determination metric calculation unit 404 acquires the application metrics included in the execution request (step S801). Hereinafter, the determination metric calculation unit 404 executes processing according to the algorithm 430. Note that it is assumed that the algorithm 430 can be changed and updated as necessary.

The determination metric calculation unit 404 calculates an average activation time of the container 300 by referring to the scaling history information 441 (step S802). For the calculation, the control log of the container 300 activated within a predetermined time from the current time is used.

The determination metric calculation unit 404 calculates a prediction target time N based on the average activation time of the container 300 (step S803). For example, the average activation time of the container 300 may be calculated as the prediction target time N as it is, the prediction target time N may be calculated by multiplying the average activation time of the container 300 by a coefficient, or the prediction target time N may be calculated by adding a fixed value to the average activation time of the container 300.

The prediction target time N is a value calculated from a time required to activate the container 300, and is used to predict a processing load of the application after the activation of the container 300.

In this manner, a prediction timing can be dynamically changed in consideration of an execution state of the container 300 of the execution environment system 110 and the like. Therefore, it is possible to calculate the determination metric for accurately estimating the processing load of the application 311.

The determination metric calculation unit 404 calculates the predicted number of containers 300 after N seconds from the current time (step S804).

Specifically, the determination metric calculation unit 404 calculates a value of the total number of containers 522 of the latest log of the container number history information 442 as the predicted number of containers 300 after N seconds.

The determination metric calculation unit 404 calculates a metric for estimating the processing load of the application 311 after N seconds from the current time as the determination metric by using the application metrics and the predicted number of containers 300 (step S805).

For example, the determination metric calculation unit 404 calculates a ratio of the number of unprocessed events (a saturation level of event processing) to the upper limit of the number of processed events of each container 300 after N seconds based on an increase amount of the number of processed events and a change amount of the event processing time. In this case, the saturation level of the event processing is used as the determination metric. Note that the saturation level of the event processing may be calculated by the sum of all the containers, or may be calculated by a value of the container with the highest processing saturation level.

Furthermore, as an example, the determination metric calculation unit 404 can consider that the event processing is saturated even in a case where the increase amount of the event processing time approaches or exceeds a predetermined threshold, and can apply further bias to the determination metric or generate an additional determination metric. In this manner, the determination metric calculation unit 404 performs calculation for generating one or more determination metrics based on the obtained information.

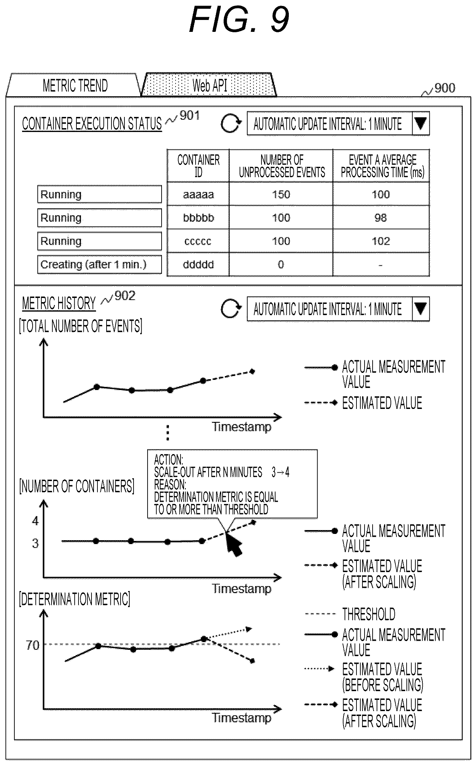

FIG. 9 is a diagram illustrating an example of a screen displayed by the metric visualization unit 410 of the first embodiment.

The metric visualization unit 410 displays a screen 900 including a display field 901 and a display field 902 based on the history DB 407.

In the display field 901, the container 300 in which the application 311 operates, the number of queued events of the application 311 on each container 300, the average processing time for each event type, and the like are displayed. In the display field 901, information regarding the container 300 that is being activated and stopped may be displayed.

In the display field 902, time-series graphs of the total number of events, the average processing time for each event type, the number of containers, the determination metric, and the like are displayed.

When a cursor is placed on a changing portion of the time-series graph, detailed information regarding the change is displayed. For example, when the cursor is placed on the changing portion of the time series graph of the number of containers, the number of added containers and a reason for scale-out are displayed.

In the time-series graph of the determination metric, the determination metric in a case where scaling is not executed and the determination metric in a case where scaling is executed are displayed.

The data displayed in the display fields 901 and 902 is updated manually or automatically. The display fields 901 and 902 may include a selection field for setting an update method, an update frequency, and the like.

According to the first embodiment, the determination metric calculation server 100 can calculate the determination metric in consideration of the processing load of the application based on the information regarding the event, such as the number of queued events and the event processing time, and transmit the determination metric to the autoscaling server 101.

### [Second Embodiment]

A second embodiment is different from the first embodiment in that a determination metric calculation server 100 changes a control parameter of an autoscaling server 101. Hereinafter, the second embodiment will be described focusing on the difference from the first embodiment.

A configuration of an IT system of the second embodiment is the same as that of the first embodiment. A functional configuration of an application execution server 104 of the second embodiment is the same as that of the first embodiment.

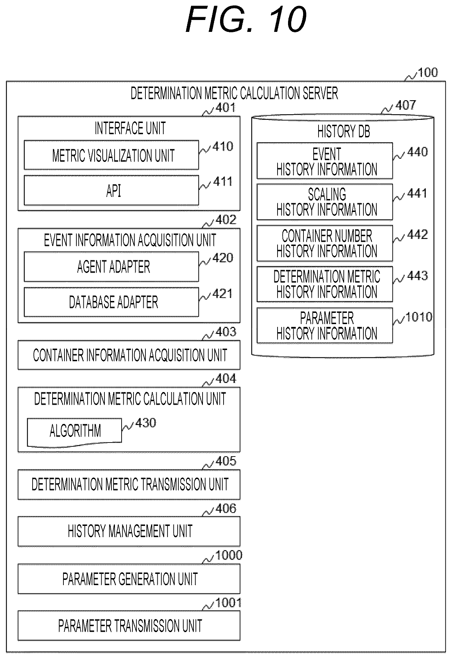

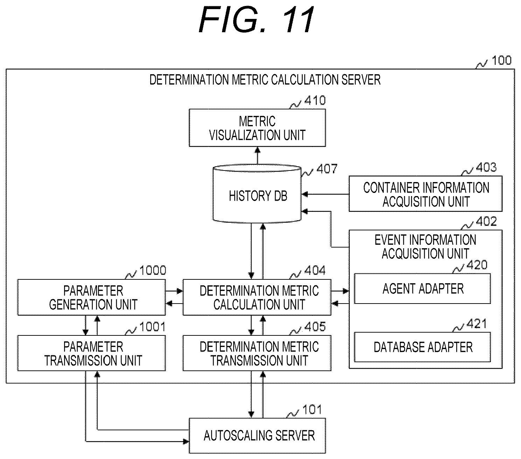

FIG. 10 is a diagram illustrating an example of a functional configuration of the determination metric calculation server 100 of the second embodiment. FIG. 11 is a diagram illustrating an example of cooperation between servers in the IT system of the second embodiment.

The determination metric calculation server 100 includes a parameter generation unit 1000 and a parameter transmission unit 1001 as new functional units. Further, a history DB 407 includes parameter history information 1010.

The parameter generation unit 1000 calculates a value of the control parameter of the autoscaling server 101. Here, the control parameter is a threshold of a determination metric, a determination period, a time from scale-out to scale-in reevaluation, and the like. For example, in a case where a determination metric calculation unit 404 uses a saturation level of event processing as the determination metric, when a rate of an increase in saturation level of the event processing with the lapse of time increases, an instruction to shorten a scale-out reevaluation time is sent to the parameter generation unit 1000, a specific parameter value is generated by the parameter generation unit 1000, and scale-in and scale-out behaviors of the autoscaling server 101 are dynamically changed.

The parameter generation unit 1000 registers the calculated value of the control parameter in the parameter history information 1010. The parameter transmission unit 1001 transmits the calculated value of the control parameter to the autoscaling server 101.

In FIG. 11, an execution environment system 110 and a database server 105 are omitted for lack of space. After calculating the determination metric, the determination metric calculation unit 404 reads the parameter generation unit 1000. The parameter generation unit 1000 calculates the value (initial value or updated value) of the control parameter. The parameter transmission unit 1001 transmits the calculated value of the control parameter to the autoscaling server 101.

A metric visualization unit 410 can present the value of the control parameter by accessing the history DB 407.

Note that the present invention is not limited to the embodiments described above, but includes various modified examples. For example, the configurations of the embodiments described above have been described in detail in order to explain the present invention in an easy-to-understand manner, and the present invention is not necessarily limited to those having all the configurations described. In addition, a part of the configuration of each embodiment can be added with another configuration, can be deleted, and can be replaced with another configuration.

In addition, some or all of the above-described configurations, functions, processing units, processing means, and the like may be implemented by hardware, for example, by designing with an integrated circuit. In addition, the present invention can also be implemented by a program code of software that implements the functions of the embodiments. In this case, a storage medium in which the program code is recorded is provided to a computer, and a processor included in the computer reads the program code stored in the storage medium. In this case, the program code itself read from the storage medium implements the functions of the above-described embodiments, and the program code itself and the storage medium storing the program code constitute the present invention. As the storage medium for supplying such a program code, for example, a flexible disk, a CD-ROM, a DVD-ROM, a hard disk, a solid state drive (SSD), an optical disk, a magneto-optical disk, a CD-R, a magnetic tape, a nonvolatile memory card, a ROM, or the like is used.

In addition, the program code for implementing the functions described in the present embodiment can be implemented by a wide range of programs or script languages such as assembler, C/C++, perl, Shell, PHP, Python, Java, and the like.

Furthermore, the program code of the software that implements the functions of the embodiments may be distributed via a network to be stored in storage means such as a hard disk or a memory of a computer or a storage medium such as a CD-RW or a CD-R, and a processor included in the computer may read and execute the program code stored in the storage means or the storage medium.

In the above-described embodiments, the control lines and information lines indicate those that are considered necessary for explanation, and do not necessarily indicate all the control lines and information lines in the product. All the configurations may be connected to each other.

## Claims

1. A computer system comprising:
at least one computer, wherein
the computer system is connected to an execution environment system that provides an instance for executing an application and an autoscaling system that controls scaling of the instance of the execution environment system,
at least one application that executes parallel distributed processing in an event-driven manner operates on the execution environment system, and
the at least one computer acquires, from the execution environment system, information regarding the number of queued events in the application and an event processing time as application metrics, calculates a determination metric to be used by the autoscaling system to determine whether or not it is necessary to execute the scaling of the instance based on the application metrics, and transmits the determination metric to the autoscaling system.

2. The computer system according to claim 1, wherein
the at least one computer acquires information regarding activation of the instance of the execution environment system, and calculates an average activation time of the instance, calculates a prediction target time for estimating the number of instances based on the average activation time, and calculates, as the determination metric, a metric for evaluating a load of the application after the prediction target time from a current time based on the number of instances on the execution environment system after the prediction target time from the current time, and the application metrics.

3. The computer system according to claim 1, wherein
the at least one computer calculates a control parameter to be used by the autoscaling system after calculating the determination metric, and transmits the control parameter to the autoscaling system.

4. The computer system according to claim 1, wherein
the at least one computer acquires a control log of the scaling executed by the autoscaling system, acquires a calculation log of the determination metric, and generates and outputs display information for displaying changes of the determination metric and the number of instances over time.

5. A metric calculation method executed by a computer system including at least one computer, wherein
the computer system is connected to an execution environment system that provides an instance for executing an application and an autoscaling system that controls scaling of the instance of the execution environment system,
at least one application that executes parallel distributed processing in an event-driven manner operates on the execution environment system, and
the metric calculation method comprises:
a first step of acquiring, by the at least one computer, information regarding the number of queued events in the application and an event processing time as application metrics from the execution environment system;
a second step of calculating, by the at least one computer, a determination metric to be used by the autoscaling system to determine whether or not it is necessary to execute the scaling of the instance based on the application metrics; and
a third step of transmitting, by the at least one computer, the determination metric to the autoscaling system.

6. The metric calculation method according to claim 5, wherein the second step includes:
a step of acquiring, by the at least one computer, information regarding activation of the instance of the execution environment system and calculating an average activation time of the instance;
a step of calculating, by the at least one computer, a prediction target time for estimating the number of instances based on the average activation time; and
a step of calculating, by the at least one computer, a metric for evaluating a load of the application after the prediction target time from a current time as the determination metric based on the number of instances on the execution environment system after the prediction target time from the current time, and the application metrics.

7. The metric calculation method according to claim 5, further comprising:
a step of calculating, by the at least one computer, a control parameter to be used by the autoscaling system after calculating the determination metric; and
a step of transmitting, by the at least one computer, the control parameter to the autoscaling system.

8. The metric calculation method according to claim 5, further comprising:
a step of acquiring, by the at least one computer, a control log of the scaling executed by the autoscaling system;
a step of acquiring, by the at least one computer, a calculation log of the determination metric; and
a step of generating and outputting, by the at least one computer, display information for displaying changes of the determination metric and the number of instances over time.
